# EUROPEAN PATENT APPLICATION

(11) **EP 1 944 949 A1**
(43) Date of publication of application: **16.07.2008**
(21) Application number: 07023892.8
(22) Date of filing: 10.12.2007
(51) Int. Cl.: H04M 1/02

(54) **Mobile phone having a plurality of keypads**

(30) Priority: 09.01.2007 KR 20070002506
(71) Applicant: Samsung Electronics Co., Ltd., Suwon-si, Gyeonggi-Do (KR)
(72) Inventor: Ko, Byung-Yeol, Suwon-si Gyeonggi-do (KR)
(74) Representative: Lang, Johannes

(57) **Abstract**

A mobile phone (10) having many key pads (31,41,42) slidingly moving and rotating to open/close is provided. The mobile phone includes a first housing (20) having a liquid crystal display (21), a second housing (30) having a first key pad (31) and rotating the first housing about a first hinge axis (A1) while confronting the first housing, and a third housing (40) having second (41) and third (42) key pads, slidingly moving while confronting the lower portion of the second housing, and rotating about a second hinge axis (A2), thereby arranging the first, second, and third key pads (31,41,42) parallel with each other.

## Description

### BACKGROUND OF THE INVENTION

### 1. Field of the Invention:

The present invention relates to a mobile phone. More particularly, the present invention relates to a mobile terminal having a plurality of key pads installed onto a phone body such that it opens and closes through sliding movement and rotation.

### 2. Description of the Related Art:

Generally, the term "mobile phone" refers to a device through which a user can perform radio communications with others while moving. Such a mobile phone includes an HHP, a CT-2 cellular phone, a digital phone, a PCS phone, a PDA and the like, which are classified into diverse types according to their external shape. For example, a mobile phone is divided into a bar-type, a flip-type and a folder-type according to its external shape. The bar-type mobile phone is constructed to have a single housing in a shape of a bar and the flip-type mobile phone is constructed to be rotatably coupled to a bar-type housing by a hinge device The folder-type mobile phone is constructed to be rotatably connected to a single bar-type housing so as to be folded by a hinge device. In addition, the mobile phone may be divided into a neck wearable-type or a wrist wearable-type according to a wearing manner. The neck wearable type is constructed to be put on around the neck by using a string, and the wrist wearable type is constructed to be put on around the wrist. In addition, the mobile phone may be divided into a rotation-type, a sliding-type and a sliding/swing-type according to an opening/closing manner. The rotation-type mobile phone means that two housings thereof are rotatably connected to each other while confronting each other, thereby opening/closing. The sliding-type mobile phone means that two housings thereof confront each other, one of which slides in a longitudinal direction along the other housing, thereby opening/closing. In addition, the sliding/swing-type mobile phone means that two housings thereof confront each other, one of which slides in a longitudinal direction along the other housing, and the other housing then is swung, thereby opening/closing.

The diverse mobile phones as divided above can be easily understood by those skilled in the art. Meanwhile, the conventional mobile phones listed above include an antenna unit, a data input/output unit and a data transmitter/receiver unit. Of course, as the data input unit, a key pad in which data is inputted by a finger-press operation is generally used, but a touch pad or a touch screen may be also used.

Further, as the data output unit for displaying data, a liquid crystal display (LCD) is generally used.

Furthermore, for a video call, a conventional mobile phone includes camera means through which a user can video-communicate with others, or can pick up images of a desired subject.

However, in case of the sliding type mobile phone, since only one of two confronting housings slides and opens in only one direction relative to the other housing to the extent of about half of a fixed length of the other housing, the whole area of the phone is not usable so that the installation of the keys and the LCD is problematically limited.

In addition, since a few keys are provided on a limited area of the phone, it is dif ficult to manipulate the keys for text input or game operation.

### SUMMARY OF THE INVENTION

An aspect of the present invention is to address the above problems and/or disadvantages and to provide at least the advantages described below. Accordingly, an aspect of the present invention is to provide a mobile phone having a plurality of key pads made visible by opening/closing through sliding movement and rotation, thereby improving the use of the phone.

Also, another aspect of the present invention is to provide a mobile phone having thereunder a plurality of key pads made visible by opening/closing through sliding movement and rotation, thereby facilitating the manipulation of keys provided on the key pads.

Still another aspect of the present invention is to provide a mobile phone having thereunder a plurality of key pads arranged in parallel through sliding movement and rotation so that a plurality of keys is arranged in QWERTY arrangement, thereby enabling two-handed key manipulation in inputting a text message or playing a game.

In accordance with an aspect of the present invention, a mobile phone is provided. The mobile phone includes a first housing having a liquid crystal display (LCD), a second housing having a first key pad and rotating the first housing about a first hinge axis while confronting the first housing, and a third housing having second and third key pads, slidingly moving while confronting the lower portion of the second housing, and rotating about a second hinge axis, thereby arranging the first, second, and third key pads parallel with each other.

In accordance with an aspect of the present invention, a mobile phone is provided. The mobile phone includes a body housing having a first key pad, a first sliding/rotating housing having a liquid crystal display (LCD), slidingly moving while confronting the upper portion of the body housing, and rotating about a first hinge axis, and a second sliding/rotating housing having second and third key pads, slidingly moving while confronting the lower portion of the body housing, and rotating about a second hinge axis, thereby arranging the first, second and third key pads parallel with each other.

In accordance with an aspect of the present invention, a mobile phone is provided.

The mobile phone includes a first housing having a first key pad and a liquid crystal display (LCD), and a second housing having second and third key pads, slidingly moving while confronting the lower portion of the first housing, and rotating about a first hinge axis, thereby arranging the first, second and third key pads parallel with each other.

### BRIEF DESCRIPTION OF THE DRAWINGS

The above and other aspects, features and advantages of certain exemplary embodiments of the present invention will be more apparent from the following detailed description taken in conjunction with the accompanying drawings, in which:
- FIG. 1: is a perspective view illustrating a construction of a mobile phone according to a first exemplary embodiment of the present invention;
- FIG. 2: is a perspective view illustrating a state where a third housing of the construction of the mobile phone according to the first exemplary embodiment is slidingly moved;
- FIG. 3: is a perspective view illustrating a process in which the third housing of the construction of the mobile phone according to the first exemplary embodiment is slidingly moved and then rotated;
- FIG. 4: is a perspective view illustrating a state where the third housing of the construction of the mobile phone according to the first exemplary embodiment is rotated;
- FIG. 5: is a perspective view illustrating a construction of a mobile phone according to a second exemplary embodiment of the present invention;
- FIG. 6: is a perspective view illustrating a state where a first sliding/rotating housing of the construction of the mobile phone according to the second exemplary embodiment is slidingly moved;
- FIG. 7: is a perspective view illustrating a state where a second sliding/rotating housing of the construction of the mobile phone according to the second exemplary embodiment is slidingly moved;
- FIGs. 8 and 9: are perspective views illustrating a process in which the second sliding/rotating housing of the construction of the mobile phone according to the second exemplary embodiment is slidingly moved and then rotated;
- FIG. 10: is a perspective view illustrating a state where the first sliding/rotating housing of the construction of the mobile phone according to the second exemplary embodiment is rotated;
- FIG. 11: is a perspective view illustrating a construction of a mobile phone according to a third exemplary embodiment of the present invention;
- FIG. 12: is a perspective view illustrating a state where a second housing of the construction of the mobile phone according to the third exemplary embodiment is slidingly moved;
- FIG. 13: is a perspective view illustrating a process in which the second housing of the construction of the mobile phone according to the third exemplary embodiment is slidingly moved and then rotated;
- FIG. 14: is a perspective view illustrating a state where the second housing of the construction of the mobile phone according to the third exemplary embodiment is rotated; and
- FIG. 15: is a perspective view illustrating a state where the second housing of the construction of the mobile phone according to the third exemplary embodiment is arranged such that key pads thereof are positioned on both sides of a liquid crystal display (LCD) of the first housing.

Throughout the drawings, it should be noted that like reference numbers are used to depict the same or similar elements, features and structures.

### DETAILED DESCRIPTION OF EXEMPLARY EMBODIMENTS

The following description with reference to the accompanying drawings is provided to assist in a comprehensive understanding of exemplary embodiments of the present invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, detailed descriptions of well-known functions and configurations will be omitted for clarity and conciseness.

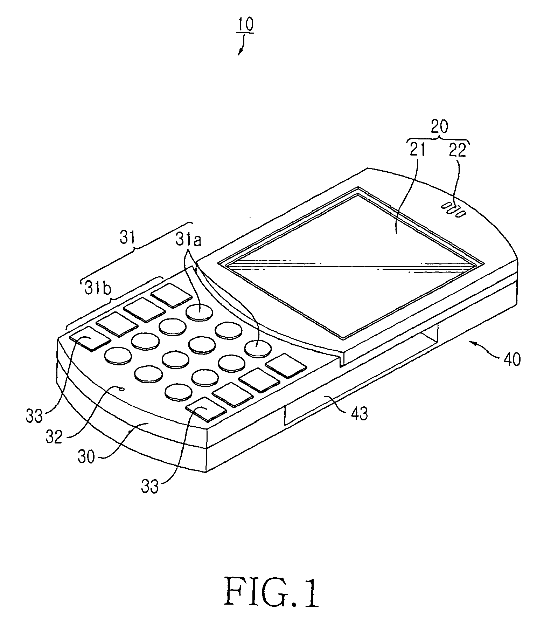

As illustrated in FIGs. 1 to 4, a mobile phone 10 includes first, second and third housings 20, 30 and 40. The first housing 20 has a liquid crystal display (LCD) 21 and a speaker unit 22. The second housing 30 has a microphone 32 and a first key pad 31. The second housing 30 is provided under the first housing 20 such that it rotates the first housing 20 about a first hinge axis A1 while confronting the first housing 20. The third housing 40 has second and third key pads 41 and 42, slidingly moves while confronting the lower portion of the second housing 30, and rotates about a second hinge axis A2, thereby arranging the first, second and third key pads 31, 41 and 42 parallel with each other.

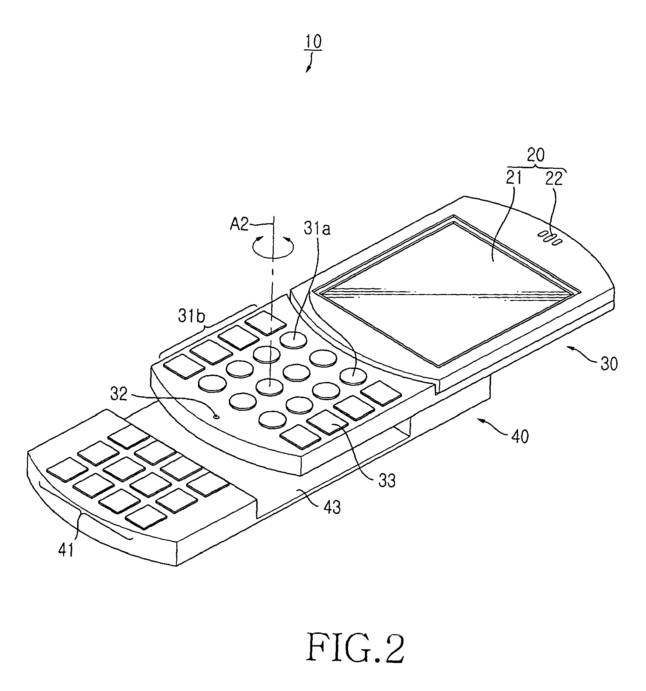

In FIGs. 1 and 2, the first key pad 31 has a key arrangement of 5x 4, and includes first and second key regions 31a and 31b, wherein the first key region 31a has a key arrangement of 3x 4, and the second key region 31b has at least one auxiliary key 33 and is disposed on opposite sides of the first key region 31a.

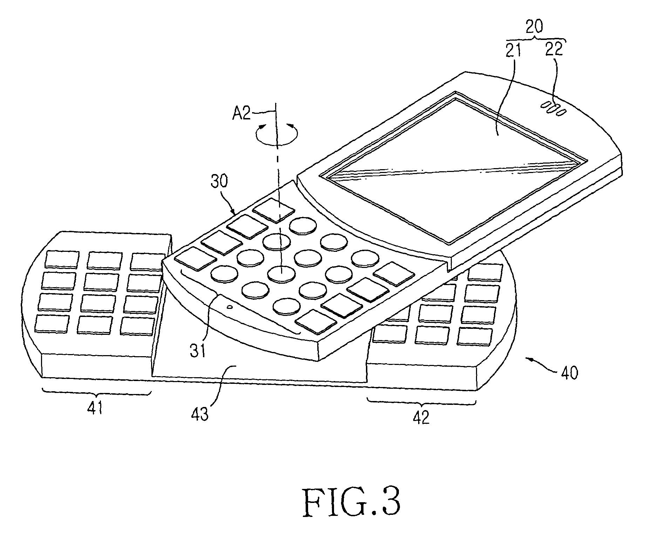

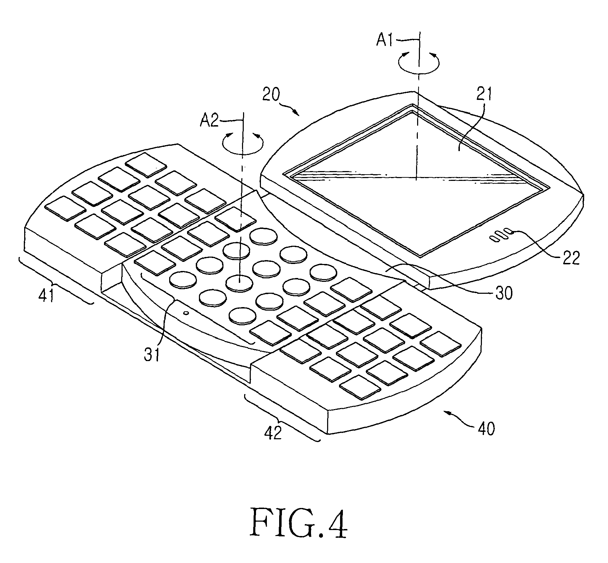

In FIGs. 3 and 4, at the center of the third housing 40, a locking recess 43 is formed such that it is coupled to the back face of the second housing 30 while the third housing 40 is slid and rotated.

In FIGs. 3 and 4, the second and third key pads 41 and 42 each have the key arrangement of 3x 4. The first, second and third key pads 31, 41 and 42 are provided on the second and third housings 30 and 40 such that when the locking recess 43 of the third housing 40 is coupled to the back face of the second housing 30 through the sliding movement and rotation of the third housing 40, the second and third key pads 41 and 42 also rotate to a position on both sides of the first key pad 31, thereby arranging the first, second, and third key pads parallel with each other.

In FIG. 1, the first key pad 31 is provided on the second housing 30 such that upon a call mode, the keys thereof are used as number keys and text keys.

In FIG. 4, the second and third key pads 41 and 42 are provided on the third housing 40 such that they are arranged parallel to the first key pad 31 so that the mobile phone 10 can be used in a QWERTY key arrangement.

In FIG. 4, between the first and second housings 30 and 40, the first hinge axis A1 is provided, and a first hinge device (not shown) is provided so as to allow the first housing 20 to rotate. Between the second and third housings 30 and 40, a second hinge device (not shown) is provided so as to be connected with the third housing 40, allowing the same to slidingly move and rotate.

Description will now be made of the operations of the mobile phone according to the first exemplary embodiment of the present invention as constructed above, with reference to FIGs. 1 to 4.

In FIGs. 1 and 2, the first housing 20 has the LCD 21 and the speaker unit 22. The first housing 20 is provided on the second housing 30, and the first hinge device is provided between the first and second housings 30 and 40 so as to be connected with the first housing 20 to allow the same to rotate about the first hinge axis A1. In this state, the third housing 40 is provided under the second housing 30, and the second hinge device (not shown) is provided between the second and third housings 30 and 40 so as to slidingly move and rotate the third housing 40 about the second hinge axis A2.

Herein, as illustrated in FIGs. 3 and 4, when a user wants to use the key pads of the mobile phone 10 as key pads for a QWERTY keyboard or game keys, the third housing 40 is slid in a downstream direction of the second housing 30. At this time, the second key pad 41 of the third housing 40 is opened, and then the third housing 40 is rotated about the second hinge axis A2.

At the same time, as illustrated in FIG. 4, the locking recess 43 of the third housing 40 is coupled to the back face of the second housing 30. At this time, the second and third key pads 41 and 42 also rotate along with the rotation of the third housing 40, so that they are arranged parallel with the first key pad 31 of the first housing 30 at both sides of the first key pad. The arrangement has at least one auxiliary key 33. In this state, the first housing 20 is rotated about the first hinge axis A1.

In FIG. 4, the first, second and third key pads 31, 41, and 42 are arranged parallel to each other, so that they may be used as a QWERTY keyboard or game keys when the phone is in a game mode.

In FIG. 1, the first key pad 31 has a key arrangement of 5x 4, and includes first and second key regions 31a and 31b, wherein the first key region 31a has a key arrangement of 3x 4, and the second key region 31b has at least one auxiliary key 33 and is disposed on opposite sides of the first key region 31a.

In FIG. 4, the second and third key regions 41 and 42 each have a key arrangement of 3x 4.

Here, like in FIG. 1, when a user uses the phone in a call mode, the third housing 40 is rotated in opposite direction about the second hinge axis A2 and then is slid to its original position, and the first housing 20 is rotated about the first hinge axis A1 to its original position.

In this state, the first key pad 31 of the second housing 30 can be used as a number key pad. The first key region 31a of the first key pad 31 has a key arrangement of 3x 4 on which numbers are printed so as to be used as the number key pad.

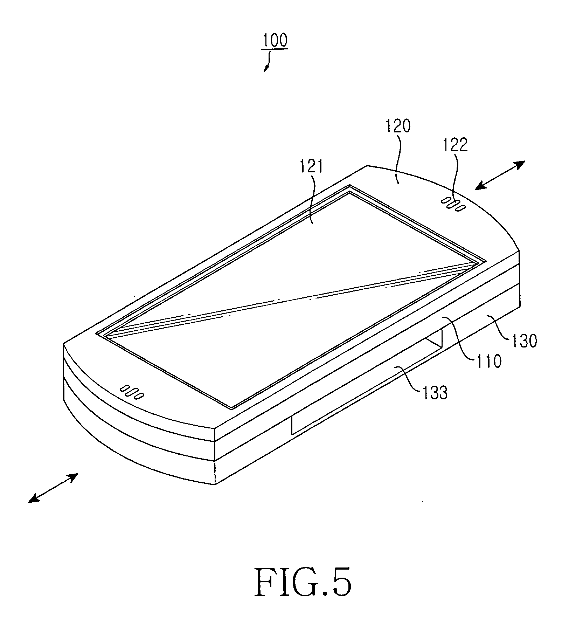

Description will now be made of the operations of the mobile phone according to a second exemplary embodiment of the present invention with reference to FIGs. 5 to 10.

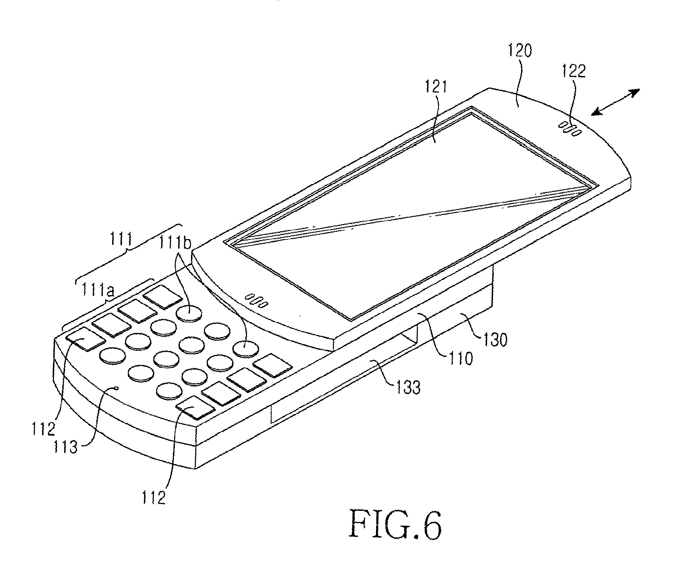

In FIGs. 5 and 6, a mobile phone 100 includes a body housing 110 and first and second sliding/rotating housings 120 and 130. The first sliding/rotating housing 120 is provided on the body housing 110, and the second sliding/rotating housing 130 is provided under the body housing 110.

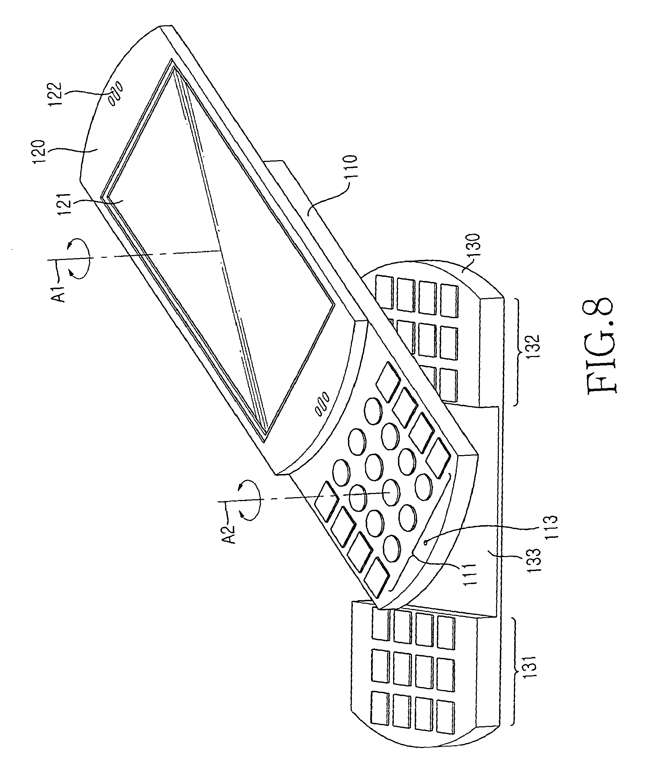

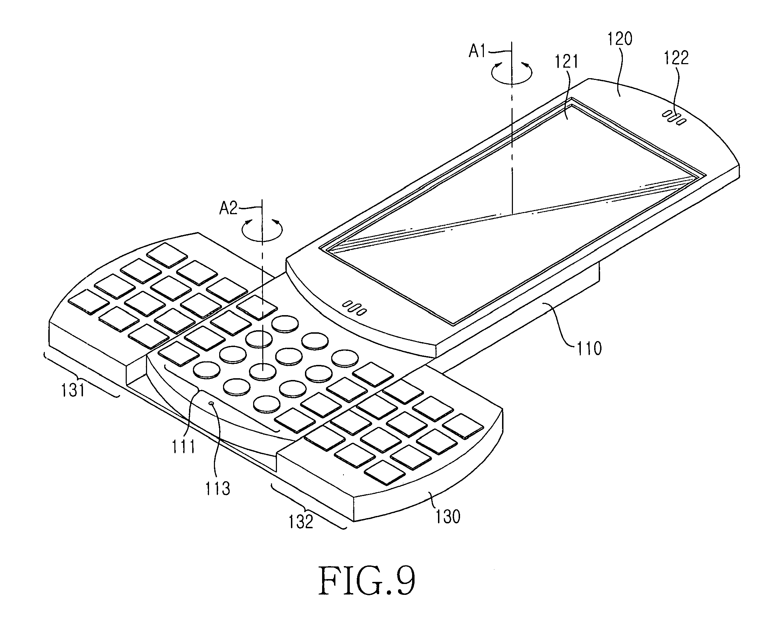

In FIGs. 8 and 9, the body housing 110 has a first key pad 111 and a microphone 113. The first sliding/rotating housing 120 has a large liquid crystal display 121 and at least one speaker unit 122. The second sliding/rotating housing 130 has second and third key pads 131 and 132.

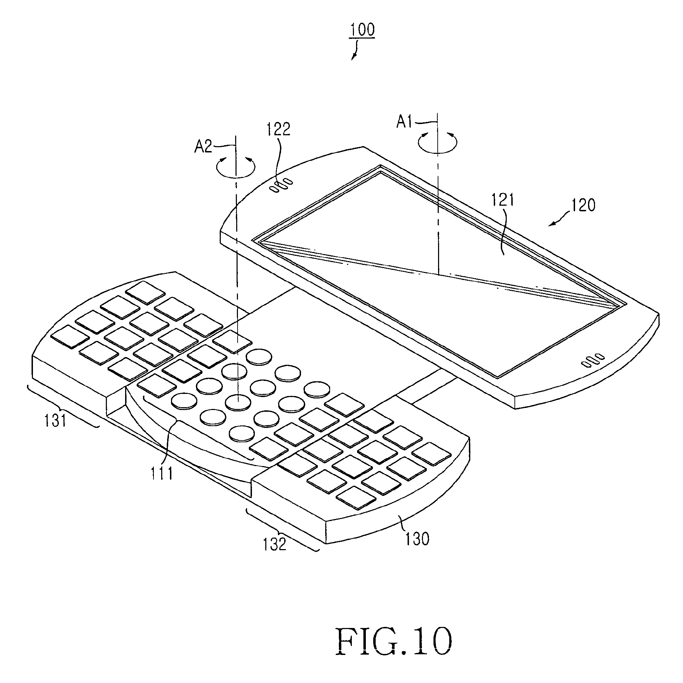

In FIG. 10, between the body housing 110 and the first sliding/rotating housing 120, a first hinge axis A1 is provided, and a first sliding/rotating hinge device (not shown) is provided so as to be connected with the first sliding/rotating housing 120, allowing the same to slidingly move and rotate. Between the body housing 110 and the second sliding/rotating housing 130, a second sliding/rotating hinge device (not shown) is provided so as to be connected with the second sliding/rotating housing 130, allowing the same to slidingly move and rotate.

In this state, in FIGs. 5 and 6, when the phone 100 is used in a call mode, the first sliding/rotating housing 120 is slidingly moved from the body housing 110. At this time, the first key pad 111 of the first sliding/rotating housing 120 is opened. The first key pad 111 includes first and second key regions 111a and 111b, wherein the first key region 111a has a key arrangement of 3x 4, and can be used as a number key pad. Numbers are printed on the first key regions 111a.

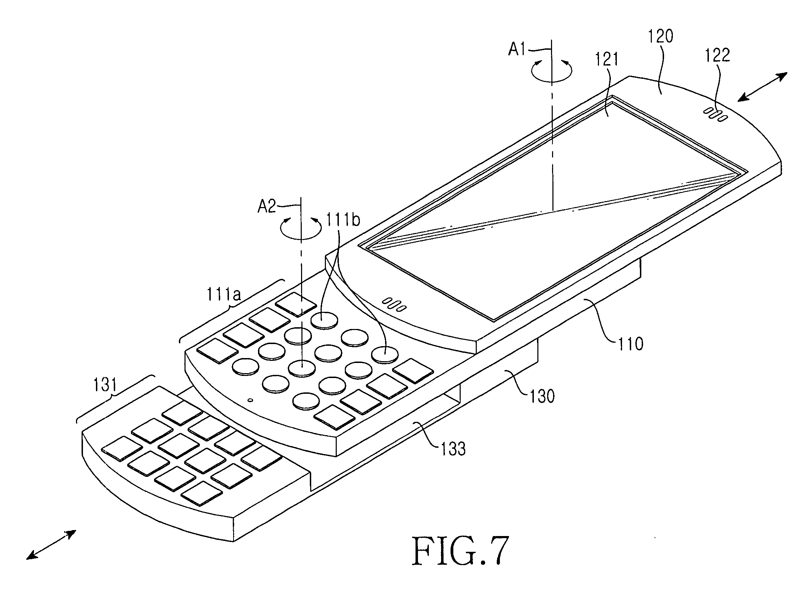

Herein, as illustrated in FIGs. 7 to 10, when a user wants to use the key pads of the phone 100 as key pads for a QWERTY keyboard or game keys, the second sliding/rotating housing 130 is slidingly moved in a downstream direction of the body housing 110. At this time, the second key pad 131 of the second sliding/rotating housing 130 is opened, and in this state, the second sliding/rotating housing 130 is rotated about the second hinge axis A2.

At the same time, as illustrated in FIGs. 8 and 9, a locking recess 133 of the second sliding/rotating housing 130 is coupled to the back face of the body housing 110. At this time, the second and third key pads 131 and 132 rotate along with the rotation of the second sliding/rotating housing 130 and open, so that they are arranged parallel with the first key pad 111 at both sides of the first key pad. The arrangement has at least one auxiliary key 112.

In this state, as illustrated in FIG. 10, the first sliding/rotating housing 120 is rotated about the first hinge axis A1. The first, second, and third key pads 111, 131, and 132 are arranged parallel with each other, and can be used as a QWERTY keyboard, or a game key pad when the phone 100 is used as a game mode.

In FIG. 10, the first key pad has a key arrangement of 5x 4, and includes first and second key regions 111a and 111b, wherein the first key region 111a has a key arrangement of 3x 4, and the second key region 111b has at least one auxiliary key 112, and is arranged along the opposite sides of the first key region 111a.

The second and third key pads 131 and 132 each have a key arrangement of 3x 4.

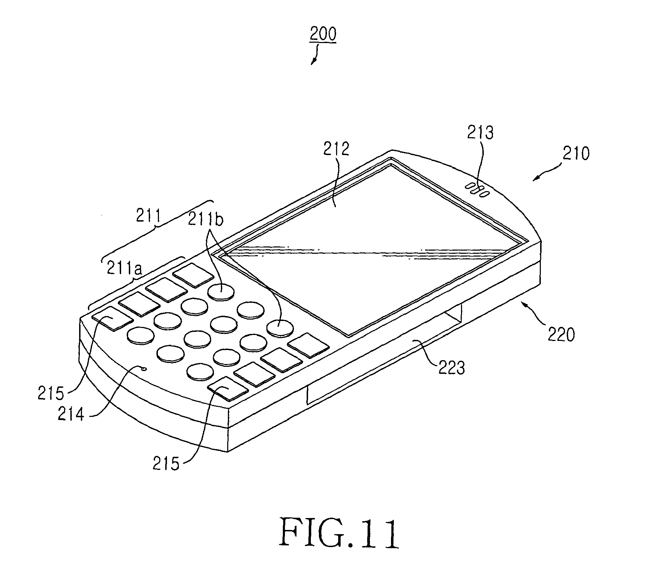

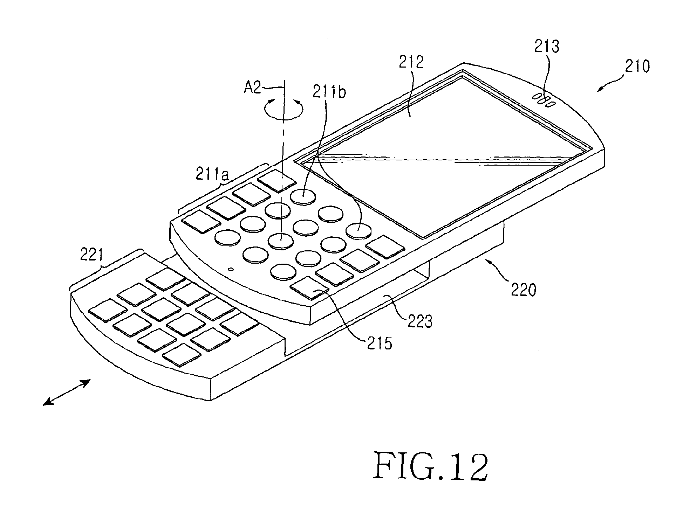

Description will now be made of the operations of the mobile phone according to a third exemplary embodiment of the present invention with reference to FIGs. 11 to 15.

In FIGs. 11 to 14, a mobile phone 200 includes a first housing 210 having a first key pad 211, a liquid crystal display (LCD) 212, a speaker unit 213, and a microphone 214, and a second housing 220 having second and third key pads 221 and 222.

In this state, the second housing 220 is provided under the first housing 210. Between the first and second housings 210 and 220, a sliding/rotating hinge device (not shown) is provided so as to be connected with the first housing 210, allowing the same to rotate about the second hinge axis A2.

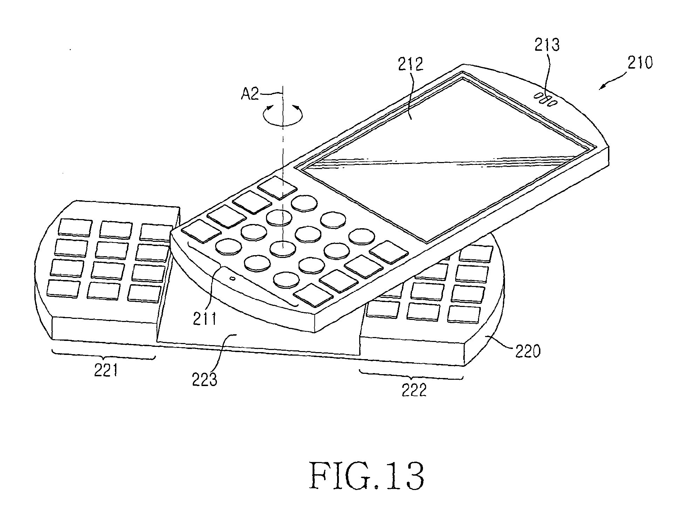

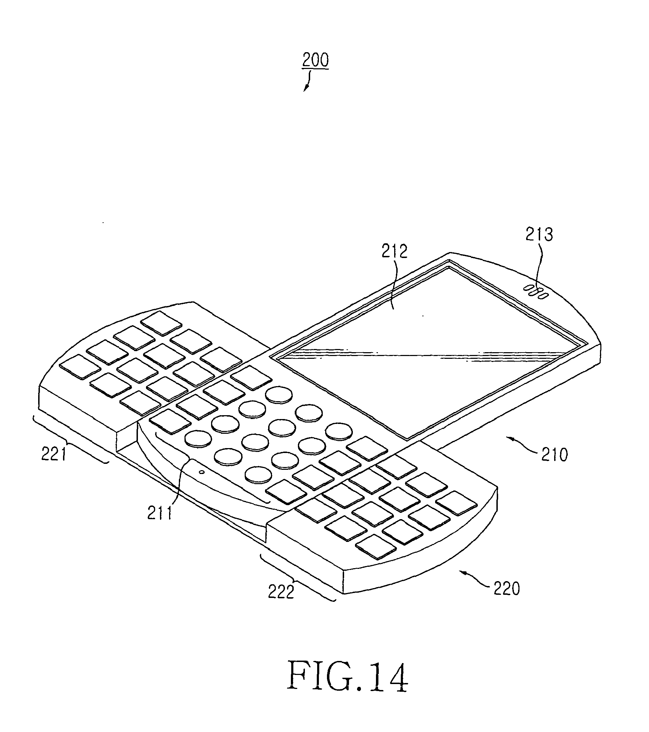

Herein, as illustrated in FIGs. 13 and 14, when a user wants to use the key pads of the phone as the key pad as a QWERTY keyboard or a game key pad, the second housing 220 is slidingly moved in a downstream direction of the first housing 210. At this time, the second key pad 221 of the second housing 220 is opened, and in this state, the second housing 220 is rotated about the second hinge axis A2.

At the same time, a locking recess 223 of the second housing 220 is coupled to the back face of the first housing 210. At this time, the second and third key pads 221 and 222 rotate along with the rotation of the second housing 220, so that they are arranged parallel with each other at both sides of the first key pad 211 of the first housing 210.

In FIG. 14, the first, second and third key pads 211, 221 and 222 are arranged parallel with each other, and can be used as a QWERTY keyboard or a game key pad when the phone 200 is used in a game mode. The first key pad 211 has a key arrangement of 5x 4, and includes first and second key regions 211a and 211b, wherein the first key region 211a has a key arrangement of 3x 4, and the second key region 211b is arranged along the opposite sides of the first key region 211a and has at least one auxiliary key 215.

The second and third key pads 221 and 222 each have a key arrangement of 3x 4.

Herein, like in FIG. 1, when a user uses the phone 200 in a call mode, the second housing 220 is rotated in the opposite direction about the first hinge axis A2 and is then slid to its original position.

In this state, the first key pad 211 of the first housing 210 can be used as a number key pad. The first key region 211a of the first key pad 211 has a key arrangement of 3x 4 on which numbers are printed so as to be used as the number key pad.

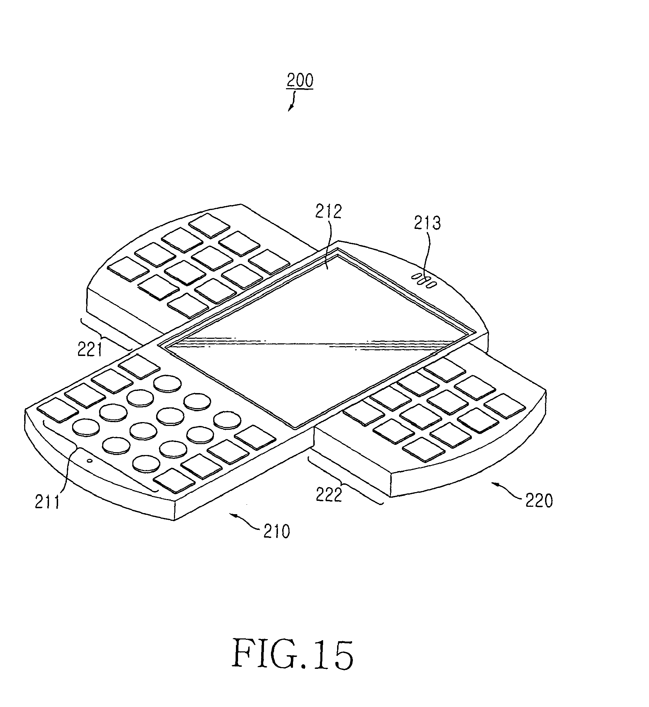

In addition, as illustrated in FIG. 15, the second housing 220 is rotated from the first housing while confronting the first housing 210, so that the second and third key pads 221 and 222 are arranged at both sides of the LCD 212 of the first housing 210.

As set forth before, according to exemplary embodiments of the present invention, the plurality of key pads are provided such that they are slidingly moved and rotated to open/close, thereby improving the utility of the mobile phone and facilitating the manipulation of the keys provided on the key pads.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A mobile phone comprising:
a first housing having a liquid crystal display (LCD);
a second housing having a first key pad and rotating the first housing about a first hinge axis while confronting the first housing; and
a third housing having second and third key pads, slidingly moving while confronting the lower portion of the second housing, and rotating about a second hinge axis, thereby arranging the first, second and third key pads parallel with each other.

2. The mobile phone according to claim 1, wherein the first key pad comprising a key arrangement of 5x 4 which comprises first and second key regions, wherein the first key region comprises a key arrangement of 3x 4, and the second key region is arranged along the opposite sides of the first key region and comprises at least one auxiliary key.

3. The mobile phone according to claim 1, further comprising a locking recess at the center of the third housing, which is coupled to the back face of the second housing while the third housing is slid and rotated.

4. The mobile phone according to claim 1, wherein the second and third key pads each comprises a key arrangement of 3x 4.

5. The mobile phone according to claim 3, wherein the first, second and third key pads are provided such that when the locking recess of the third housing is coupled to the back face of the second housing through the sliding movement and rotation of the third housing, the second and third key pads also rotate to a position on both sides of the first key pad, thereby arranging the first, second and third key pads parallel with each other.

6. The mobile phone according to claim 1, wherein the first, second and third key pads comprises a QWERTY key arrangement.

7. The mobile phone according to claim 1, further comprising;
a first hinge axis between the first and second housings; and
a first hinge device which is connected with the first housing, allowing the same to rotate, and wherein a second hinge device is provided between the second and third housings so as to be connected with the third housing, allowing the same to slidingly move and rotate.

8. A mobile phone comprising:
a body housing having a first key pad;
a first sliding/rotating housing having a large liquid crystal display (LCD), slidingly moving while confronting the upper portion of the body housing and rotating about a first hinge axis; and
a second sliding/rotating housing having second and third key pads, slidingly moving while confronting the lower portion of the body housing and rotating about a second hinge axis, thereby arranging the first, second and third key pads parallel with each other.

9. The mobile phone according to claim 8, wherein the first key pad comprising a key arrangement of 5x 4 which comprises first and second key regions, wherein the first key region comprises a key arrangement of 3x 4, and the second key region is arranged along the opposite sides of the first key region and has at least one auxiliary key.

10. The mobile phone according to claim 8, further comprising a locking recess at the center of the second sliding/rotating housing, which is coupled to the back face of the body housing while the second sliding/rotating housing is slid and rotated.

11. The mobile phone according to claim 8, wherein the second and third key pads each comprises a key arrangement of 3x 4.

12. The mobile phone according to claim 10, wherein the first, second and third key pads are provided such that when the locking recess of the second sliding/rotating housing is coupled to the back face of the body housing through the sliding movement and rotation of the second sliding/rotating housing, the second and third key pads also rotate to a position on both sides of the first key pad, thereby arranging the first, second and third key pads parallel with each other.

13. The mobile phone according to claim 8, wherein the first, second and third key pads comprises a QWERTY key arrangement.

14. The mobile phone according to claim 8, further comprising:
a first hinge axis between the body housing and the first sliding/rotating housing; and
a first sliding/rotating hinge device which is connected with the first sliding/rotating housing, allowing the same to slidingly move and rotate, and
wherein a second sliding/rotating hinge device is provided between the body housing and the second sliding/rotating housing so as to be connected with the second sliding/rotating housing, allowing the same to slidingly move and rotate.

15. A mobile phone comprising:
a first housing having a first key pad and a liquid crystal display (LCD); and
a second housing having second and third key pads, slidingly moving while confronting the lower portion of the first housing, and rotating about a first hinge axis, thereby arranging the first, second, and third key pads parallel with each other.

16. The mobile phone according to claim 15, wherein the first key pad comprises:
a key arrangement of 5x 4; and
first and second key regions, wherein the first key region comprises a key arrangement of 3x 4, and the second key region is arranged along the opposite sides of the first key region and comprises at least one auxiliary key.

17. The mobile phone according to claim 15, further comprising a locking recess at the center of the second housing, which is coupled to the back face of the first housing while the second housing is slid and rotated.

18. The mobile phone according to claim 15, wherein the second and third key pads each comprises a key arrangement of 3x 4.

19. The mobile phone according to claim 17, wherein the first, second and third key pads are provided such that when the locking recess of the second housing is coupled to the back face of the first housing through the sliding movement and rotation of the second housing, the second and third key pads also rotate to a position on both sides of the first key pad, thereby arranging the first, second and third key pads parallel with each other.

20. The mobile phone according to claim 15, wherein the first, second and third key pads comprises a QWERTY key arrangement.

21. The mobile phone according to claim 15, further comprising:
a first hinge axis between the first and second housings; and
a sliding/rotating hinge device which is connected with the second housing, allowing the same to slidingly move and rotate.

22. The mobile phone according to claim 15, wherein the second and third key pads rotate the second housing and are arranged at both sides of the LCD of the first housing.

23. A mobile phone comprising a second housing having second and third key pads, and slidingly moving and rotating while confronting the lower portion of a first housing, thereby arranging a first key pad provided in the first housing parallel with the second and third key pads.
